# FASCICULE DE BREVET EUROPEEN

(11) **EP 4 348 019 B1**
(45) Date de publication et mention de la délivrance du brevet: **19.02.2025**
(21) Numéro de dépôt: 22734023.9
(22) Date de dépôt: 30.05.2022
(51) Int. Cl.: F02C 7/28, F02K 1/72, F02K 1/76

(54) **ENSEMBLE INVERSEUR DE POUSSEE POUR TURBOREACTEUR**
SCHUBUMKEHRANORDNUNG FÜR EIN TURBOSTRAHLTRIEBWERK
THRUST REVERSER ASSEMBLY FOR A TURBOJET ENGINE

(30) Priorité: 31.05.2021 FR 2105724
(43) Date de publication de la demande: 10.04.2024
(73) Titulaire: Safran Nacelles, 76700 Gonfreville-l'Orcher (FR)
(72) Inventeur: CARUEL, Pierre, Charles, 77550 MOISSY-CRAMAYEL (FR)
(74) Mandataire: Cabinet Beau de Loménie
(86) Numéro de dépôt international: PCT/FR2022/051029
(87) Numéro de publication internationale: WO 2022/254141

(56) Documents cités:
- EP-A1- 3 388 657
- WO-A1-2011/117555
- WO-A1-2015/112239
- WO-A1-2021/044097

## Description

### Domaine Technique

Le présent exposé concerne un ensemble inverseur de poussée pour turboréacteur, et plus particulièrement un joint d'étanchéité d'inverseur de poussée.

Un tel ensemble inverseur de poussée peut être utilisé pour tout type de turboréacteur, en particulier pour des turboréacteurs d'aviation civile.

### Technique antérieure

Les inverseurs de poussée sont des éléments d'un turboréacteur permettant d'orienter vers l'avant une partie du flux d'air traversant le turboréacteur, afin d'inverser la poussée exercée par le turboréacteur et ralentir l'aéronef sur lequel le turboréacteur est monté en cas d'atterrissage ou de freinage d'urgence, par exemple lors d'un abandon de décollage.

Les documents EP 3388657 A1 et US 2014/000237 A1 présentent des exemples d'inverseurs de poussée.

En particulier, parmi les inverseurs de poussée connus figurent les inverseurs de poussée à grilles. Ces derniers comprennent des grilles s'étendant sur une circonférence du turboréacteur et présentant des profils aérodynamiques dirigés vers l'avant, ainsi que des vérins entraînant les grilles et un capot mobile. En temps normal, un capot fixe recouvre les grilles empêchant ainsi l'air de s'échapper du turboréacteur par ces dernières ; en revanche, lorsque l'inverseur est activé, les grilles et le capot mobile coulissent le long du turboréacteur, libérant la grille et permettant ainsi à l'air de s'échapper et d'être redirigé vers l'avant.

Dans certains ensembles inverseur de poussée de ce type, des verrous sont présents entre la partie fixe et la partie mobile, afin de les maintenir en position rapportée l'une contre l'autre. Dans une telle position, un joint d'étanchéité est comprimé entre la partie fixe et la partie mobile afin d'empêcher l'air de s'échapper par les grilles.

Habituellement, dans les ensembles inverseurs de poussée de ce type, le capot mobile est entraîné en translation par deux vérins, généralement disposés de façon axisymétrique. Une telle structure requiert une grand précision d'assemblage afin d'obtenir un montage serré entre la partie fixe et la partie mobile de l'ensemble inverseur de poussée et ainsi assurer l'étanchéité entre ces dernières tout en contraignant le moins possible la structure fixe. En outre, la commande des deux vérins doit être synchronisée afin de ne pas introduire d'efforts supplémentaires dans le capot mobile.

Il est alors avantageux de réaliser un ensemble inverseur de poussée pour turboréacteur ne comprenant qu'un unique vérin. En effet, une telle configuration présente un assemblage facilité, et simplifie la commande du vérin.

Toutefois, l'utilisation d'un unique vérin déséquilibre la structure de l'ensemble inverseur. En effet, la fermeture de l'ensemble inverseur de poussée est obtenue par l'effort axial du vérin situé sur la périphérie du turboréacteur, qui tend à incliner et mettre en travers la partie mobile par rapport à l'axe de l'ensemble inverseur de poussée. L'effort transmis par le vérin pour comprimer le joint d'étanchéité et engager la partie mobile contre la partie fixe est alors inégalement transmise, ce qui entraîne un risque de fuites voire de mauvais verrouillage de la partie mobile contre la partie fixe.

Cela requiert alors un d'imposer une course supplémentaire au niveau du vérin de façon que le déplacement soit suffisant au niveau des verrous pour assurer leur manoeuvre.

Il existe donc un besoin pour un ensemble inverseur de poussée pour turboréacteur facilitant l'engagement des verrous lors du fonctionnement de l'inverseur de poussée, et qui soient dépourvu, au moins en partie, des inconvénients des configurations connues précitées.

### Exposé de l'invention

Le présent exposé concerne un inverseur de poussée pour turboréacteur, comprenant
une structure fixe ayant un axe principal
une virole, mobile et apte à se déplacer en translation le long de l'axe principal entre une position rapportée, dans laquelle la virole est rapportée contre la structure fixe, et une position écartée, dans laquelle la virole est écartée de la structure fixe,
au moins un verrou apte à maintenir la structure fixe et la virole en position rapportée,
au moins un actionneur monté entre la structure fixe et la virole, configuré pour déplacer la virole selon l'axe principal entre la position rapportée et la position écartée, et
un joint d'étanchéité configuré pour assurer l'étanchéité entre la structure fixe et la virole en position rapportée,
dans lequel le joint d'étanchéité présente une section évolutive le long de sa circonférence.

Par circonférence est comprise une ligne parcourant le joint selon sa direction curviligne principale. Par section est comprise une coupe transversale du joint perpendiculairement à la direction curviligne principale du joint. Par section évolutive, on comprend que la section du joint, donc son profil en coupe transversal, est variable le long de sa circonférence. En particulier, un ou plusieurs paramètres de son profil peuvent varier, et notamment sa hauteur, son aire, sa largeur, son diamètre etc.

Un tel ensemble inverseur de poussée présente l'avantage de sécuriser la fermeture de l'ensemble inverseur de poussée en permettant d'adapter la section du joint, et donc l'effort nécessaire à la fermeture du joint, à l'effort transmis par le vérin à travers ladite section du joint.

Dans certains modes de réalisation, la hauteur du joint diminue de façon monotone entre une section maximale présentant une hauteur maximale et une section minimale présentant une hauteur minimale.

Par monotone est compris la monotonie au sens mathématique, c'est-à-dire qu'en parcourant le joint de la section maximale vers la section minimale, la hauteur est décroissante, sans être nécessairement strictement décroissante.

Dans certains modes de réalisation, la réduction de la hauteur du joint entre la section maximale et la section minimale est comprise entre 30% et 70%, de préférence entre 40% et 60%.

Dans certains modes de réalisation, la section maximale est située à proximité de l'actionneur et la section minimale est éloignée de l'actionneur.

Dans certains modes de réalisation, le joint comprend plusieurs parties ayant des sections de hauteurs sensiblement constantes, de préférence une partie maximale présentant une section de hauteur maximale, une partie minimale présentant une section de hauteur minimale, et au moins une partie intermédiaire prévue entre les parties maximale et minimale.

On comprendra que chacune des parties de sections maximale, minimale et intermédiaire ne sont pas nécessairement continues. En particulier, la partie de section intermédiaire peut comprendre deux parties respectivement continues de joint mais situées de part et d'autre des parties de section maximale et minimale.

Les parties ayant des sections de hauteurs sensiblement constantes peuvent être reliées entre elles par des régions de hauteur variable, afin d'assurer la continuité de la section du joint.

Le critère de réduction de hauteur entre la section maximale et la section minimale peut être remplacé et/ou complété par d'autres critères pour des grandeurs présentant un maximum à la section maximale et un minimum à la section minimale. Par exemple, l'aire de la section du joint peut être évolutive et donc, en particulier, diminuer entre la section maximale et la section minimale. Dans un autre exemple, le diamètre et/ou le périmètre de la section du joint, ou du corps du joint, peut être évolutif et donc, en particulier, diminuer entre la section maximale et la section minimale.

La hauteur du joint, ou tout autre paramètre variant entre la section maximale et la section minimale, peut être continue. Par continue est compris la continuité au sens mathématique, c'est-à-dire qu'en parcourant la longueur du joint, la hauteur, ou plus généralement le paramètre en question, ne diminue pas brutalement, par exemple du fait d'une arête.

Dans certains modes de réalisation, le joint comprend plusieurs tronçons emboîtés les uns dans les autres.

Par emboitement est compris l'assemblage de deux tronçons par complémentarité de forme, réversible ou non. Par exemple, les tronçons emboitables peuvent présenter chacun une extrémité dont la section extérieure est sensiblement de la forme de la section intérieure de la partie de joint dans laquelle elle est amenée à s'emboîter.

Dans certains modes de réalisation, la virole est apte à être amenée dans une position d'enclenchement, située plus en avant que la position rapportée et dans laquelle le joint est davantage comprimé que dans la position rapportée, afin d'enclencher le verrou entre la structure fixe et la virole.

En position d'enclenchement, le joint est comprimé sous l'action de l'actionneur. Une fois l'escamotage suffisant pour enclencher les verrous atteint, l'actionneur se relâche et le joint se détend légèrement pour être comprimé par les verrous.

Dans certains modes de réalisation, le joint est creux et présente des trous de pressurisation sur une face intérieure.

Un joint creux est un joint dont la section présente un contour de matière entourant un vide de matière. Des exemples de joints creux sont connus de l'homme du métier, par exemple sous l'appellation de joint en oméga ou en P.

Par face intérieure du joint est compris la face du joint orientée vers l'intérieur de la turbomachine. Autrement dit, la face intérieure du joint est celle qui est au contact de la veine de la turbomachine lorsque l'inverseur est fermé, c'est-à-dire lorsque la virole est dans la position rapportée.

Les trous de pressurisation permettent de gonfler le joint afin d'augmenter l'effort de contact avec la paroi en vis-à-vis, de façon à limiter au maximum les fuites.

Dans certains modes de réalisation, le joint est un joint annulaire s'étendant de manière continue sur 360°. Le joint est ainsi irinterrompu sur toute sa longueur, c'est-à-dire le long de toute la circonférence de la structure fixe, afin d'assurer l'étanchéité entre la structure fixe et la virole.

Dans certains modes de réalisation, le joint comprend un corps configuré pour accueillir une partie d'étanchéité de la virole ou de la structure fixe.

Par partie d'étanchéité est comprise une partie prévue pour comprimer le joint, par exemple un compresseur de joint ou une bride.

Dans certains modes de réalisation, le joint comprend une base engagée dans un support de joint de la structure fixe ou de la virole. Le support peut prendre toute forme permettant de maintenir le joint, par exemple présenter un contour enserrant la base du joint. La base et le corps du joint peuvent être confondus. Dans certains modes de réalisation, le joint est solidaire de la structure fixe. La partie d'étanchéité est alors portée par la virole tandis que le support de joint est porté par la structure fixe. Toutefois, la configuration inverse est possible.

Dans certains modes de réalisation, l'ensemble inverseur présente un unique actionneur.

Toutefois, dans d'autres modes de réalisation, l'ensemble inverseur de poussée peut comprendre plusieurs actionneurs, en particulier des actionneurs disposés de façon dissymétrique.

Par dissymétrique est compris une dissymétrie par rapport à une symétrie centrale, par exemple une dissymétrie de positionnement ou de dimensionnement des actionneurs ou toute autre configuration entraînant un risque de mise en travers de la partie mobile lors l'actionnement des vérins.

En présence de plusieurs actionneurs, les sections maximale et minimale peuvent être comprises comme des sections dont les hauteurs présentent respectivement un maximum et un minimum local.

Dans certains modes de réalisation, au moins un actionneur est un vérin.

Dans certains modes de réalisation, le verrou présente une première partie sur la virole et une deuxième partie sur la structure fixe, les première et deuxième parties pouvant s'assembler par complémentarité de forme, être verrouillées l'une contre l'autre par tout moyen de verrouillage réversible connu de l'homme du métier.

Dans certains modes de réalisation, l'ensemble inverseur comprend deux verrous.

Dans certains modes de réalisation, au moins un verrou, et de préférence chaque verrou, est disposé à plus de 60° de l'acticnneur. Les deux verrous peuvent notamment être situés à des positions sensiblement de 0° et 180°, lorsque la position d'un vérin correspond à 90°.

La structure de l'inverseur n'est pas limitée à deux verrous, et il est compris que les verrous peuvent être présents par paires symétriques, ou encore un nombre quelconque de verrous équirépartis sur la circonférence de l'ensemble inverseur.

Dans certains modes de réalisation, la section transverse du corps du joint possède une forme sensiblement ellipsoïdale présentant un méplat ou des lèvres amenés à être en contact avec une partie d'étanchéité de la virole, rectangulaire avec arêtes arrondis ou toute autre forme connue de l'homme du métier permettant d'assurer une bonne étanchéité.

Dans certains modes de réalisation, le joint est réalisé dans un matériau ayant une raideur plus élevée à proximité de l'actionneur qu'à distance de l'actionneur. Ceci permet d'adapter encore un peu plus l'effort nécessaire à la fermeture de l'inverseur de poussée.

Le présent exposé concerne également un ensemble propulsif incluant un turboréacteur et un inverseur de poussée selon l'un quelconque des modes de réalisation précédents.

Le présent exposé concerne également un aéronef comprenant un ensemble propulsif selon l'un quelconque des modes de réalisation précédents.

Les caractéristiques et avantages précités, ainsi que d'autres, apparaîtront à la lecture de la description détaillée qui suit, d'exemples de réalisation du dispositif et du procédé proposés. Cette description détaillée fait référence aux dessins annexés.

### Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence. En outre, des éléments (ou parties d'élément) appartenant à un exemple de réalisation différent mais ayant une fonction analogue sont repérés sur les figures par des références numériques incrémentées de 100.
[Fig. 1] La figure 1 est une vue latérale d'un exemple d'aéronef.
[Fig. 2] La figure 2 est une vue en coupe axiale d'un exemple de turboréacteur à flux mélangés.
[Fig. 3] La figure 3 représente une vue latérale d'un exemple d'ensemble inverseur de poussée, dans laquelle la nacelle n'est pas représentée.
[Fig. 4] La figure 4 représente une vue en perspective de cet ensemble inverseur de poussée.
[Fig. 5] La figure 5 est une vue en coupe selon un plan axial représentant un premier exemple de cet ensemble inverseur de poussée.
[Fig. 6] La figure 6 est une vue en perspective représentant une partie fixe de cet ensemble inverseur de poussée.
[Fig. 7] La figure 7 est une vue présentant une coupe d'un tronçon de joint.
[Fig. 8A] La figure 8A est une vue schématique représentant une structure fixe présentant un joint selon un premier exemple.
[Fig. 8B] La figure 8B est une vue schématique représentant une structure fixe présentant un joint selon un deuxième exemple.
[Fig. 9] La figure 9 est une vue en perspective de deux tronçons de joint.
[Fig. 10] La figure 10 est une vue du joint en situation.
[Fig. 11A] La figure 11A représente une vue en perspective d'un tronçon de joint.
[Fig. 11B] La figure 11B représente une vue en perspective d'un support de joint.

### Description des modes de réalisation

Dans le présent exposé, les termes « axial », « radial », « tangentiel », « circonférentiel », « intérieur », « extérieur » et leurs dérivés sont définis par rapport à l'axe principal de la turbomachine ; on entend par « plan axial » un plan passant par l'axe principal de la turbomachine et par « plan radial » un plan perpendiculaire à cet axe principal ; les termes « amont », « aval », « avant » et « arrière » sont définis par rapport à la circulation de l'air dans la turbomachine ; les positions angulaires sont considérées dans un repère cylindrique ayant pour axe l'axe principal de la turbomachine, les angles étant comptés positivement dans le sens antihoraire vu du côté aval de la turbomachine ; enfin, les termes « hauteur » et « largeur » sont définis dans le plan axial local selon les directions axiale et radiale, respectivement ; et sauf mention contraire, deux éléments seront considérés « proches » ou « à proximité » (respectivement « distants » ou « éloignés ») si leurs positions angulaires sont proches (respectivement « distantes ») dans le repère cylindrique, de préférence à moins de 30°, de préférence encore à moins de 10°.

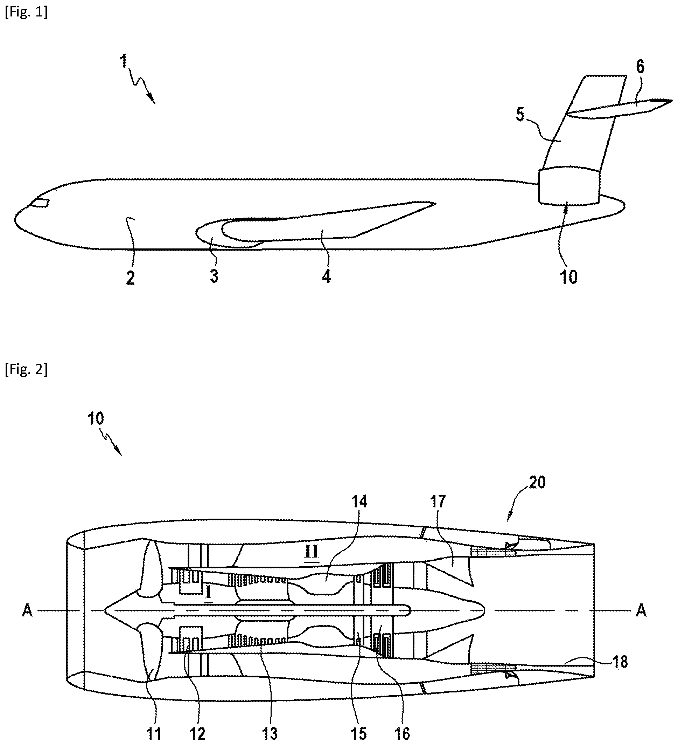

La figure 1 est une vue latérale schématique d'un exemple d'aéronef 1, comprenant un fuselage 2 d'où s'étendent latéralement une voilure 4 par l'intermédiaire d'emplantures 3. L'aéronef 1 présente un empennage à l'arrière, comprenant une dérive 5 sur laquelle est fixé un plan horizontal 6. Un turboréacteur 10 est monté de chaque côté du fuselage 2, à l'arrière de celui-ci, par l'intermédiaire d'un mât réacteur.

L'exemple d'aéronef 1 de la figure 1 est uniquement illustratif, et toute autre disposition des éléments de structures est possible selon les connaissances générales de l'homme du métier. En particulier, les turboréacteurs 10 ne sont pas limités à deux, et peuvent être disposés sous la voilure 4 plutôt qu'à l'arrière du fuselage 2.

La figure 2 présente un exemple de turboréacteur 10 à flux mélangés ayant un axe principal A représenté en trait mixte. L'écoulement de l'air dans le turboréacteur 10 est représenté sur le schéma de la gauche vers la droite. L'entrée du turboréacteur 10 présente une soufflante 11 entraînant l'air à l'intérieur du turboréacteur 10. Le flux d'air est ensuite divisé en un flux d'air primaire I et un flux d'air secondaire II. Le flux d'air primaire I est comprimé successivement par un compresseur basse pression 12 et un compresseur haute pression 13, entraînés respectivement par une turbine basse pression 16 et une turbine haute pression 15. Entre les compresseurs 12, 13 et les turbines 15, 16 se trouve une chambre de combustion 14 recevant l'air comprimé par les compresseurs 12, 13 et dans laquelle est injecté le carburant afin de procéder à la combustion. Les gaz de combustion sortent de la chambre de combustion 14 en entraînant les turbines 15 et 16 et rejoignent en sortie le flux d'air secondaire II, ce dernier parcourant le turboréacteur 10 en périphérie radiale du flux d'air primaire I. Un mélangeur 17 est positionné en sortie des turbines 15, 16 afin de favoriser le mélange des deux flux de gaz I, Il et optimiser ainsi la poussée totale des gaz sortant par la tuyère 18, à l'extrémité distale du turboréacteur 10.

L'exemple de turboréacteur 10 de la figure 2 est illustratif et le turboréacteur 10 ne se limite pas à ce mode de réalisation.

Une partie arrière du turboréacteur 10 présente un ensemble inverseur de poussée 20, situé sur une circonférence du turboréacteur 10.

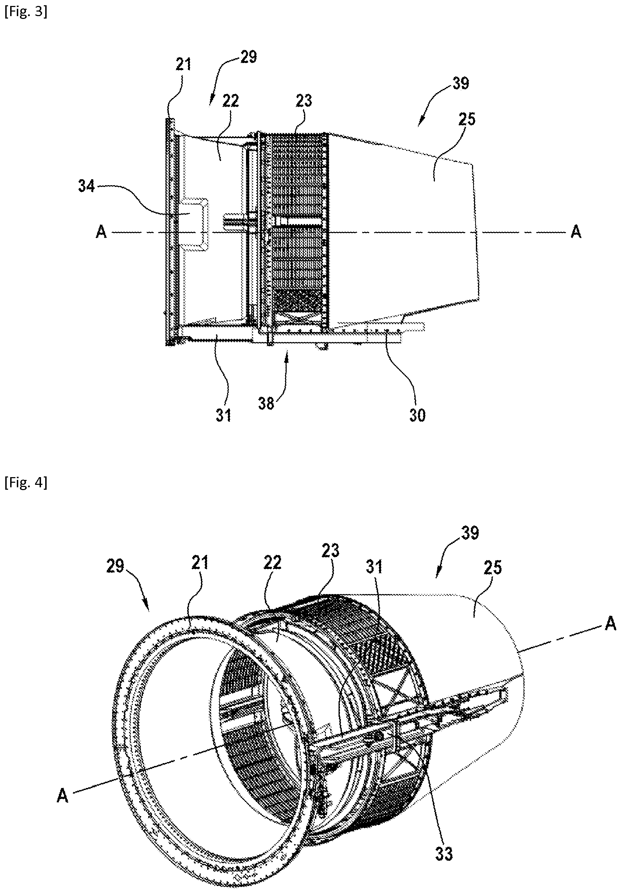

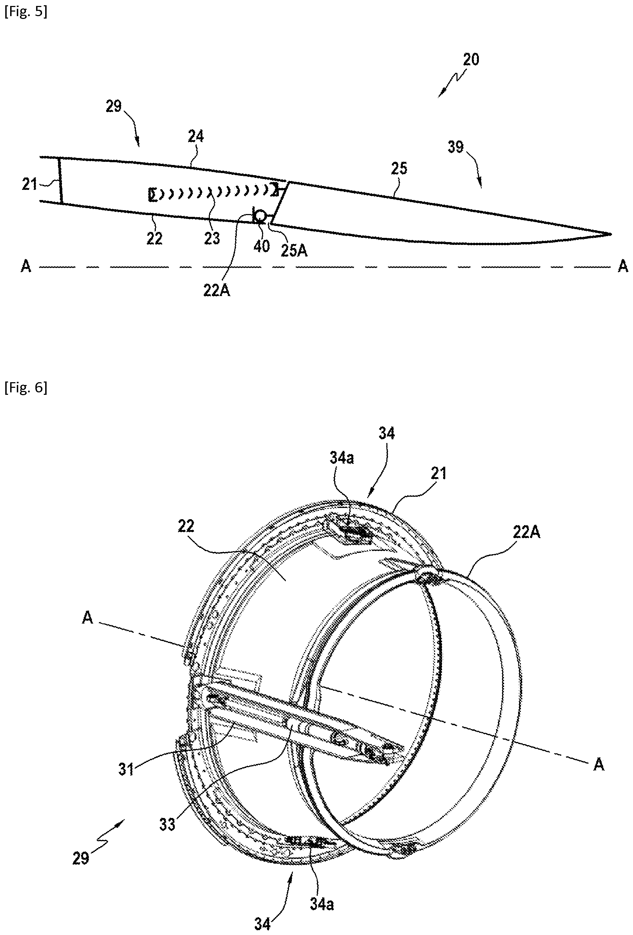

Les figures 3 et 4 représentent respectivement des vues latérale et en perspective de cet ensemble inverseur de poussée 20, dans lequel un capot 24 n'a pas été représenté afin de dévoiler la structure interne de l'inverseur de poussée 20 ; ce capot 24 sera présenté en référence à la figure 5.

L'inverseur de poussée 20 comprend une partie fixe 29, comprenant les pièces fixes dans le référentiel du moteur, et une partie mobile 39, en translation par rapport à la partie fixe 29.

La partie fixe 29 comprend une bride de fixation 21, permettant de fixer l'inverseur de poussée 20 sur un carter du turboréacteur 10, une structure fixe 22, entourant une veine du moteur, et un capot fixe 24 (visible sur la figure 5) entourant la structure fixe 22.

La partie mobile 39 est coaxiale à la partie fixe 29 et comprend au moins une grille d'inverseur 23, s'étendant sur un contour circonférentiel du turboréacteur 10, et une virole 25. La virole 25, prévu en aval des grilles 23, est configurée pour être rapportée de manière étanche contre la partie fixe 29 dans l'état fermé. Dans l'état fermé, la grille 23 est située entre la structure fixe 22 et le capot fixe 24. La partie mobile comprend en outre au moins un panneau de blocage permettant d'obstruer la sortie directe du moteur afin de dévier le flux d'air à travers les grilles 23 lors du fonctionnement de l'inverseur 20.

L'ensemble inverseur de poussée comprend un dispositif d'actionnement 38, comprenant une poutre 31, une glissière 30 et un dispositif d'entraînement 33. La poutre 31 est solidaire de la partie fixe 29 et s'étend axialement le long de la surface externe de la partie fixe 29 ; la glissière 30 est solidaire de la partie mobile 39 et montée en translation sur la poutre 31 ; le dispositif d'entraînement 33 est monté pour sa part entre la poutre 31 et la glissière 30 afin d'entraîner la partie mobile 39 en translation par rapport à la partie fixe 29.

Dans le présent exemple, le dispositif d'entraînement 33 prend la forme d'un unique vérin 33. L'action de ce vérin 33 est décrite en référence à la figure 5.

La figure 5 est une coupe selon un plan axial de l'ensemble inverseur de poussée 20. En particulier, la figure 5 représente le capot 24, la virole 25 et les grilles 23.

Hors du fonctionnement de l'inverseur de poussée 20, la virole 25 est rapportée de façon étanche contre la partie fixe 29, empêchant ainsi le passage de l'air par les grilles 23.

La partie mobile 39 est montée en translation axiale par rapport à la partie fixe 29 et l'action du dispositif d'entraînement 33 permet à l'inverseur de poussée 20 d'entrer dans un état ouvert dans lequel la virole 25 et les grilles 23 sont dégagées du capot fixe 24 de sorte qu'un passage d'air est laissé entre la partie fixe 29 et la partie mobile 39. Ce passage d'air traverse les grilles 23, dont l'orientation permet de rediriger vers l'amont le flux d'air, et ainsi ralentir l'aéronef 1.

La figure 5 présente un premier exemple de l'ensemble inverseur de poussée, dans lequel la structure fixe 22 présente un support de joint 22A à son extrémité aval, le support permettant d'accueillir le joint 40 contre lequel s'applique en l'écrasant une partie d'étanchéité formée par un compresseur de joint 25A porté par la virole 25.

La figure 6 présente la partie fixe 29 de l'ensemble inverseur de poussée. On retrouve la glissière 31 et le vérin 33. On identifie également deux verrous 34, ou plus exactement les premières parties 34a de ces verrous 34, disposés de part et d'autre de la partie fixe 29. En particulier, les premières parties 34a de ces deux verrous 34 sont disposées sur la surface externe de la structure fixe 22, et à des positions sensiblement de 0° et 180° lorsque la position du vérin 33 est à 270°.

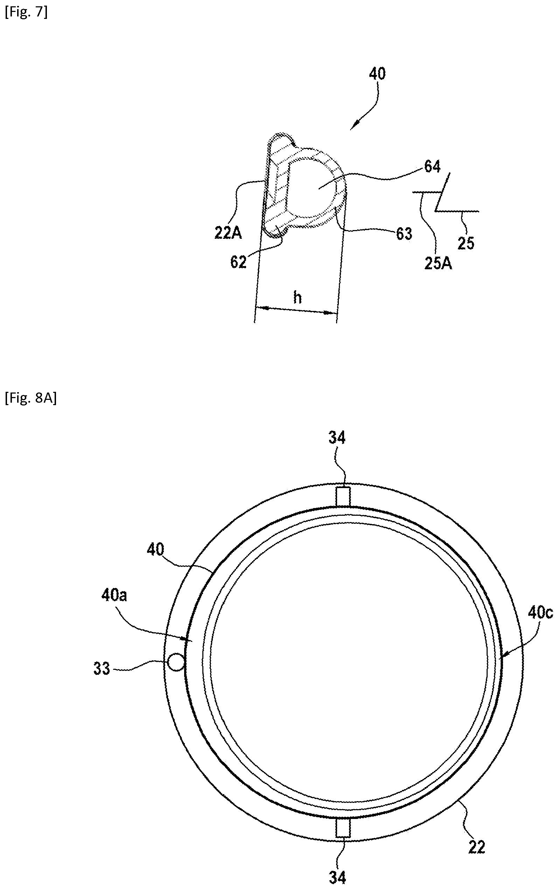

La figure 7 est une coupe transversale correspondant à un agrandissement d'une vue de la figure 5, représentant un tronçon de joint 41 et le compresseur de joint 25A, ici formé par une bordure de la virole 25, dans laquelle le tronçon de joint 41 est monté dans un support de joint 22A.

Le joint est formé d'un corps 63 présentant une cavité interne 64, duquel s'étend une base 62 de forme complémentaire à la forme du support de joint 22A. En particulier, le corps de joint peut avoir une forme d'arc de cercle, ou bien toute forme permettant d'assurer l'étanchéité par appui du corps 63 contre la surface antagoniste de la virole 25, par exemple en présentant un méplat ou une forme sensiblement rectangulaire. Le joint 40 peut également présenter des lèvres s'étendant radialement à partir du corps, afin de renforcer l'étanchéité du joint 40.

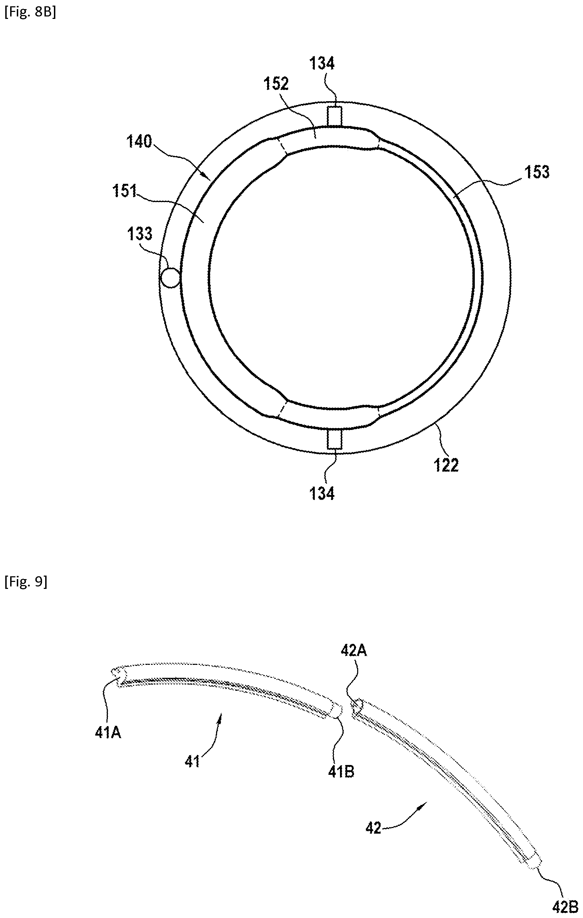

On va maintenant décrire deux modes de réalisation du joint 40 relativement aux figures 8A et 8B.

La figure 8A présente un premier exemple de joint 40, sur la circonférence duquel une section maximale 40a présente une aire maximale et une section minimale 40c présente une aire minimale. Entre ces deux positions, l'aire d'une section du joint 40 varie de façon monotone et régulière.

La figure 8B présente un deuxième exemple de joint 140, formé de trois parties ayant des sections d'aires sensiblement constantes, comprenant une partie de section maximale 151, une partie de section intermédiaire 152 de part et d'autre de la partie de section maximale 151, la partie de section intermédiaire 152 reliée à une partie de section minimale 153. Entre deux parties de section d'aires constantes, le joint 140 peut présenter une arête et la section du joint 140 diminuer brutalement, ou au contraire le joint 140 peut présenter des parties de jonction permettant à l'aire de la section de varier continument, et ainsi limiter les risques de perte d'étanchéité du joint 140.

Il est clair pour l'homme du métier que cet exemple est descriptif, et que le nombre de parties ayant des sections d'aires constantes n'est pas limité à trois. De plus, les exemples des figures 8A et 8B présentent des sections d'aires variables représentées avec des largeurs variables, mais il est clair pour l'homme du métier que la variation d'aire peut également être réalisée par une variation de hauteur indépendamment d'une variation de largeur.

En particulier, le joint 40, 140 peut être un joint annulaire s'étendant de manière continue, c'est-à-dire sans interruption de contour, ou discontinue sur 360° ou moins.

Dans un ensemble inverseur présentant une pluralité de vérins, la présente structure de joint 40, 140 décrite relativement aux figures 8A et 8B est applicable en considérant les maximums et minimums d'aire, de largeur ou de hauteur de section comme des maximums et des minimums locaux.

Le joint 40 peut être formé d'une pluralité de tronçons emboîtés les uns dans les autres, par exemple pour faciliter des opérations d'assemblage et de maintenance.

La figure 9 représente deux exemples de tronçons du joint 40 creux, dans lequel un premier tronçon 41 présente deux extrémités 41A, 41B, l'extrémité 41B présentant une forme apte à s'emboîter dans une extrémité 42A d'un second tronçon 42, lui-même présentant une extrémité 42B apte à s'emboîter avec un tronçon suivant, et ainsi de suite pour former la longueur complète du joint 40, sur toute sa circonférence.

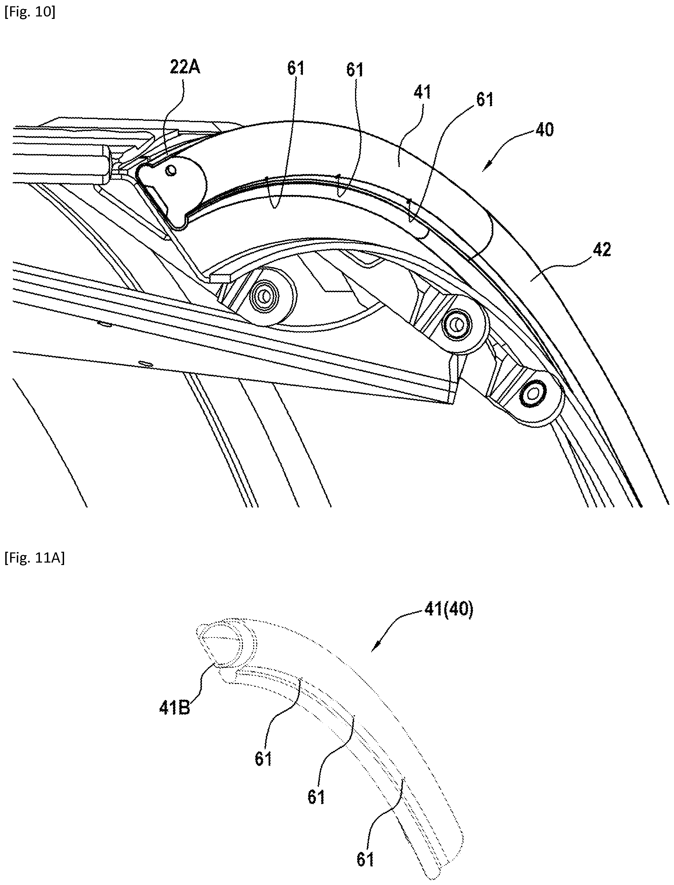

La figure 10 représente les tronçons décrits à la figure 9, une fois assemblés et montés contre la structure fixe 22 via le support de joint 22A. En particulier ici, le joint 40 représenté dans la figure 9 n'est pas un joint avec une circonférence à 360°, l'extrémité du tronçon 41 ne présentant pas une forme pour emboîter le tronçon 41 avec un autre tronçon.

Le joint 40 creux présente des trous de pressurisation 61, disposés sur une surface intérieure du joint 40, ainsi que sur l'extrémité du tronçon non relié à un autre tronçon, lorsque le joint n'est pas à 360°.

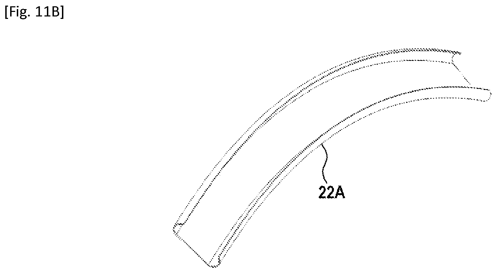

Les figures 11A et 11B correspondent respectivement à un tronçon 41 du joint 40, et à un exemple de support de joint 22A apte à accueillir le tronçon 41.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Ensemble inverseur de poussée (20) pour turboréacteur (10), comprenant
une structure fixe (22), ayant un axe principal ;
une virole (25), mobile et apte à se déplacer en translation le long de l'axe principal entre une position rapportée, dans laquelle la virole (25) est rapportée contre la structure fixe (22), et une position écartée, dans laquelle la virole (25) est écartée de la structure fixe (22) ;
au moins un verrou (34), apte à maintenir la structure fixe (22) et la virole (25) en position rapportée ;
au moins un actionneur (33), monté entre la structure fixe (22) et la virole (25), configuré pour déplacer la virole (25) selon l'axe principal entre la position rapportée et la position écartée ; et
un joint d'étanchéité (40,140) configuré pour assurer l'étanchéité entre la structure fixe (22) et la virole (25) en position rapportée,
dans lequel le joint d'étanchéité (40) présente une section évolutive le long de sa circonférence.

2. Ensemble inverseur de poussée (20) selon la revendication 1, dans lequel la hauteur du joint (40) diminue de façon monotone entre une section maximale présentant une hauteur maximale et une section minimale présentant une hauteur minimale.

3. Ensemble inverseur de poussée (20) selon la revendication 2, dans lequel la section maximale est située à proximité de l'actionneur (33) et la section minimale est éloignée de l'actionneur (33).

4. Ensemble inverseur de poussée (20) selon l'une quelconque des revendications 1 à 3, dans lequel le joint (40,140) comprend plusieurs parties (151,152,153) ayant des sections de hauteurs sensiblement constantes, de préférence une partie (151) maximale présentant une section de hauteur maximale, une partie minimale (153) présentant une section de hauteur minimale, et au moins une partie intermédiaire (152) prévue entre les parties maximale (151) et minimale (153).

5. Ensemble inverseur de poussée (20) selon l'une quelconque des revendications 1 à 4, dans lequel le joint (40) comprend plusieurs tronçons (41, 42) emboîtés les uns dans les autres.

6. Ensemble inverseur de poussée (20) selon l'une quelconque des revendications 1 à 5, dans lequel la virole (25) est apte à être amenée dans une position d'enclenchement, située plus en avant que la position rapportée et dans laquelle le joint (40) est davantage comprimé que dans la position rapportée, afin d'enclencher le verrou (34) entre la structure fixe (22) et la virole (25).

7. Ensemble inverseur de poussée (20) selon l'une quelconque des revendications 1 à 6, dans lequel le joint (40) est creux et présente des trous de pressurisation (61) sur une face intérieure.

8. Ensemble inverseur de poussée (20) selon l'une quelconque des revendications 1 à 7, dans lequel le joint (40) comprend un corps (63) configuré pour accueillir un compresseur de joint (25A) de la virole (25).

9. Ensemble inverseur de poussée (20) selon l'une quelconque des revendications 1 à 8, comprenant un unique actionneur (33).

10. Ensemble propulsif comprenant un turboréacteur (10) et un inverseur de poussée (20) selon l'une quelconque des revendications 1 à 9. i

## Patentansprüche

1. Schubumkehranordnung (20) für ein Turbinenstrahlwerk (10), umfassend
eine feste Struktur (22), die eine Hauptachse aufweist,
einen Mantel (25), der beweglich und dazu geeignet ist, sich durch Verschiebung entlang der Hauptachse zwischen einer anliegenden Position, in welcher der Mantel (25) gegen die feste Struktur (22) anliegt, und einer abgesetzten Position zu bewegen, in welcher der Mantel (25) von der festen Struktur (22) abgesetzt ist,
zumindest einen Riegel (34), der dazu geeignet ist, die feste Struktur (22) und den Mantel (25) in der anliegenden Position zu halten,
zumindest ein Stellglied (33), das zwischen der festen Struktur (22) und dem Mantel (25) montiert und dazu ausgestaltet ist, den Mantel (25) entlang der Hauptachse zwischen der anliegenden Position und der abgesetzten Position zu bewegen, und eine Dichtung (40, 140), die dazu ausgestaltet ist, die Dichtheit zwischen der festen Struktur (22) und dem Mantel (25) in der anliegenden Position sicherzustellen, wobei die Dichtung (40) einen sich entlang ihres Umfangs verändernden Querschnitt aufweist.

2. Schubumkehranordnung (20) nach Anspruch 1, wobei die Höhe der Dichtung (40) sich auf monotone Weise zwischen einem maximalen Querschnitt, der eine maximale Höhe aufweist, und einem minimalen Querschnitt, der eine minimale Höhe aufweist, verringert.

3. Schubumkehranordnung (20) nach Anspruch 2, wobei der maximale Querschnitt sich nahe dem Stellglied (33) befindet und der minimale Querschnitt von dem Stellglied (33) entfernt ist.

4. Schubumkehranordnung (20) nach einem der Ansprüche 1 bis 3, wobei die Dichtung (40, 140) mehrere Teile (151, 152, 153) umfasst, die im Wesentlichen konstante Höhen aufweisen, vorzugsweise einen maximalen Teil (151), der einen Querschnitt maximaler Höhe aufweist, einen minimalen Teil (153), der einen Querschnitt minimaler Höhe aufweist, und zumindest einen Zwischenteil (152), der zwischen dem maximalen (151) und dem minimalen Teil (153) vorgesehen ist.

5. Schubumkehranordnung (20) nach einem der Ansprüche 1 bis 4, wobei die Dichtung (40) mehrere Teilstücke (41, 42) umfasst, die ineinander verschachtelt sind.

6. Schubumkehranordnung (20) nach einem der Ansprüche 1 bis 5, wobei der Mantel (25) dazu geeignet ist, in eine Einrückposition gebracht zu werden, die sich weiter vorne befindet als die anliegende Position, und in welcher die Dichtung (40) stärker komprimiert ist als in der anliegenden Position, um den Riegel (34) zwischen die feste Struktur (22) und den Mantel (25) einzurücken.

7. Schubumkehranordnung (20) nach einem der Ansprüche 1 bis 6, wobei die Dichtung (40) hohl ist und Druckbeaufschlagungslöcher (61) auf einer Innenseite aufweist.

8. Schubumkehranordnung (20) nach einem der Ansprüche 1 bis 7, wobei die Dichtung (40) einen Körper (63) umfasst, der dazu ausgestaltet ist, einen Dichtungskompressor (25A) des Mantels (25) aufzunehmen.

9. Schubumkehranordnung (20) nach einem der Ansprüche 1 bis 8, umfassend ein einziges Stellglied (33).

10. Triebwerksanordnung umfassend ein Turbinenstrahlwerk (10) und eine Schubumkehr (20) nach einem der Ansprüche 1 bis 9.

## Claims

1. A thrust reverser assembly (20) for a turbojet engine (10), comprising
a stationary structure (22), having a main axis;
a movable shroud (25), which is capable of moving in translation along the main axis between an attached position, in which the shroud (25) is attached to the stationary structure (22), and a spaced position, in which the shroud (25) is spaced from the stationary structure (22);
at least one latch (34) capable of holding the stationary structure (22) and
the shroud (25) in the attached position;
at least one actuator (33), mounted between the stationary structure (22) and the shroud (25), configured to move the shroud along the main axis between the attached position and the spaced position; and
a gasket (40,140), configured to provide a seal between the stationary structure (22) and the shroud (25) in the attached position,
wherein the gasket (40) has a varying cross section along its circumference.

2. The thrust reverser assembly (20) according to claim 1, wherein the height of the gasket (40) decreases monotonically between a maximum cross section having a maximum height and a minimum cross section having a minimum height.

3. The thrust reverser assembly (20) according to claim 2, wherein the maximum cross section is located in proximity to the actuator (33) and the minimum cross section is far from the actuator (33).

4. The thrust reverser assembly (20) according to any one of claims 1 to 3, wherein the gasket (40,140) comprises several portions (151,152,153) having cross sections of substantially constant heights, preferably a maximum portion (151) having a cross section of maximum height, a minimum portion (153) having a cross section of minimum height, and at least one intermediate portion (152) provided between the maximum (151) and minimum (153) portions.

5. The thrust reverser assembly (20) according to any one of claims 1 to 4, wherein the gasket (40) comprises several segments (41, 42) nested within each other.

6. The thrust reverser assembly (20) according to any one of claims 1 to 5, wherein the shroud (25) is capable of being brought into an interlocking position, located further forward than the attached position, and wherein the gasket (40) is more compressed than in the attached position, in order to interlock the latch (34) between the stationary structure (22) and the shroud (25).

7. The thrust reverser assembly (20) according to any one of claims 1 to 6, wherein the gasket (40) is hollow and has pressurization holes (61) on an inner face.

8. The thrust reverser assembly (20) according to any one of claims 1 to 7, wherein the gasket (40) comprises a body (63) configured to accommodate a gasket compressor (25A) of the shroud (25).

9. The thrust reverser assembly (20) according to any one of claims 1 to 8, comprising a single actuator (33).

10. A propulsion assembly comprising a turbojet engine (10) and a thrust reverser (20) according to any one of claims 1 to 9.
